Europäisches Patentamt

European Patent Office

Office européen des brevets

(19)

(11) Publication number: **0 337 076**
A1

## (12) EUROPEAN PATENT APPLICATION

(21) Application number: **89102589.2**

(22) Date of filing: **15.02.89**

(51) Int. Cl.⁴: **C01B 13/02**

The title of the invention has been amended (Guidelines for Examination in the EPO, A-III, 7.3).

(30) Priority: **22.02.88 US 158435**

(43) Date of publication of application:
**18.10.89 Bulletin 89/42**

(84) Designated Contracting States:
**AT BE DE FR GB IT NL SE**

(71) Applicant: **AIR PRODUCTS AND CHEMICALS, INC.**
**P.O. Box 538**
**Allentown, Pennsylvania 18105(US)**

(72) Inventor: **Moore, Robert Byron**
**2951 Edgemont Court**
**Allentown, PA 18103(US)**

(74) Representative: **Kador & Partner**
**Corneliusstrasse 15**
**D-8000 München 5(DE)**

(54) **Cyclic separation of oxygen from air using molten salts.**

(57) A process is set forth for recovering oxygen and/or nitrogen from air (10) using an oxygen acceptor wherein the final heating of the air is accomplished by direct heat exchange with the acceptor (24) and the oxygen-depleted gas stream is combusted (26, 28) to provide heat for the oxidized oxygen acceptor being regenerated and desorbing oxygen.

EP 0 337 076 A1

## MOLTEN SALT HEAT PRESSURE CYCLE

### TECHNICAL FIELD OF THE INVENTION

The Government of the United States of America has rights in this invention pursuant to Contract No. DE-AC07-82CE40544 awarded by the U.S. Department of Energy.

The present invention is directed to the field of chemical absorptive separation of oxygen from gas streams using a continuous cyclic process. More particularly, the present invention is directed to the field of molten alkali metal salt absorption and desorption for recovery of oxygen and/or nitrogen from air in an energy efficient process.

### BACKGROUND OF THE PRIOR ART

Various chemical absorptive separations of oxygen from air using alkali metal nitrate and nitrite molten salt oxygen acceptors are known in the prior art.

For instance, in U.S. Patent 4,132,766, the basic concept for recovery of oxygen from air is set forth. Air is introduced directly into a reaction vessel containing the oxygen acceptor after being compressed, and the oxygen acceptor, after being regenerated, is heated by an unspecified source.

In U.S. Patent 4,287,170, a similar chemical absorptive separation of oxygen from air is set forth wherein the air is compressed, heated against waste nitrogen and then contacted with the oxygen acceptor. Additional oxygen can be removed by a scavenger system.

U.S. Patent 4,340,578 discloses a further concept with regard to chemical absorptive separation of oxygen from air wherein feed air is compressed, dried and warmed against product oxygen and the combustion product of the nitrogen waste stream before being introduced into a reaction vessel for absorption of oxygen by the oxygen acceptor.

U.S. Patent 4,521,398 is directed to another chemical absorptive separation of oxygen from air, wherein air is heated by heat exchange with nitrogen waste combustion products prior to being subjected to chemical absorption to remove oxygen. The oxygen-depleted nitrogen waste is heat exchanged against air feed and product oxygen, stripped of entrained oxygen acceptor and combusted with fuel and expanded before being ultimately heat exchanged again with feed air and oxygen product.

U.S. Patent 4,526,775 is directed to a chemical absorptive separation of oxygen from air using a multiplicity of absorption stages, each with its own independent closed cycle desorption loop.

U.S. Patent 4,529,577 is directed to an oxygen acceptor composition for the chemical absorptive separation of oxygen from air, wherein specified oxide contents are included in the alkali metal nitrate and nitrite composition.

U.S. Patent 4,565,685 is directed to a chemical absorptive separation of oxygen from air, wherein the oxygen acceptor is warmed by heat exchange with itself as well as being further warmed by heat exchange in an externally heated heater, and the oxygen acceptor is further pressurized before being desorbed of contained oxygen and recycled.

U.S. Patent 4,617,182 is directed to a process which integrates an oxygen producing chemical absorptive separation with a high heat producing extraneous process which utilizes oxygen from the separatory process. Oxidized oxygen acceptor is heated to desorption temperatures by heat exchange with the extraneous heat producing system before being desorbed of oxygen and recycled.

The present invention provides capital and thermodynamic energy efficiencies in chemical absorptive separation over the processes of the prior art.

### BRIEF SUMMARY OF THE INVENTION

The present invention is directed to a continuous process for producing oxygen and/or nitrogen by the repeated steps of contacting a feed air stream with a molten solution of an alkali metal nitrate and nitrite oxygen acceptor, which absorbs oxygen to become oxidized in a reaction zone, separately releasing the oxygen from the oxidized oxygen acceptor so as to regenerate the oxygen acceptor and generate product oxygen in a desorption zone, recycling the regenerated oxygen acceptor and removing an oxygen-depleted gas stream wherein the additional steps of the present invention further include, initially heating the feed air stream to a temperature in the range of 500°F to 700°F by indirect heat exchange with a heat source, further heating the feed air stream to reaction zone temperature in the range of 900°F to 1300°F by direct contact heat exchange with the oxygen acceptor which is cooled to remove heat of the exothermic absorption of oxygen and heating either the oxidized oxygen acceptor prior to regeneration in a desorption zone or the regenerated oxygen acceptor by indirect heat exchange with the combustion product of at least the oxygen content of the oxygen-depleted gas stream and a fuel source to drive the absorbed oxygen from the oxidized oxygen acceptor in the desorption zone.

Preferably the process includes recovering energy from the combustion product of at least the oxygen content of the oxygen-depleted gas stream.

Preferably, in a low pressure cycle, the recovery of energy from the combustion product is achieved by heat exchange of the combustion product with the feed air stream being heated in the range of 500° F to 700° F. Alternately, in a high pressure cycle, the combustion product is reduced in pressure through a turbine to recover work which can be implemented in the feed air or product oxygen compressors.

Preferably the feed air stream is initially heated to approximately 650° F by indirect heat exchange with a heat source. Additionally, the feed air stream is preferably dried and separated from any contained carbon dioxide prior to utilization.

Preferably, the product oxygen is indirectly heat exchanged against the feed air stream to assist in initially heating the feed air stream to a temperature in the range of 500° F to 700° F by indirect heat exchange.

Preferably, at least a portion of the regenerated oxygen acceptor is pumped to a heating zone and then recycled to the desorption zone as a heat source to regenerate oxidized oxygen acceptor. Preferably, the oxidized oxygen acceptor can be reduced in pressure from the pressure of the absorption zone before being regenerated in the desorption zone to recover product oxygen. Heating at absorption pressure or after pumping to a higher pressure can be effected to minimize or eliminate oxygen flashing in the heat zone and for production of oxygen at elevated pressure.

DETAILED DESCRIPTION OF THE DRAWINGS

FIG 1 is a first embodiment of the present invention.

FIG 2 is a second embodiment of the process of the present invention.

FIG 3 is a third embodiment of the process of the present invention.

DETAILED DESCRIPTION OF THE INVENTION

The present invention provides improvements in the chemical absorptive separation of oxygen from oxygen-containing gas streams wherein several process steps of heating incoming air, heat regeneration of salt solution and power recovery from heated waste nitrogen are integrated to reduced capital costs and improve energy usage and requirements. To make such a process efficient, it is necessary to provide an energy efficient effective driving force constituting pressure differential and/or temperature differential to enhance a higher capacity of absorption of the oxygen acceptor, as well as enhancing the ease of oxygen desorption from the oxygen acceptor. Specifically, for heat economy, the supply of feed air must be heated in an efficient manner and the product oxygen and waste nitrogen streams must be cooled before export from the process. When waste nitrogen is available at elevated pressure, it is desirable to recover the energy by the creation of work in a turbine. The present invention achieves these goals in an integrated manner which results in efficiencies surpassing the prior art by heating of the feed air stream from an initial heated level of 500° F to 700° F, preferably 650° F to the absorption zone operating temperature of 900° F to 1300° F by direct heat exchange of the initially heated feed air stream with the oxygen acceptor. This effects a cooling of the oxygen acceptor which is under exothermic conditions during the absorption stage which results in enhanced absorption capacity in the oxygen acceptor. Further, heat evolved in a fired heater is indirectly heat exchanged with the oxidized oxygen acceptor or regenerated oxygen acceptor and cascades from the oxygen acceptor where it enhances desorption of oxygen to the waste nitrogen or oxygen-depleted gas stream which latter resulting high temperature stream is cascade heat exchanged indirectly with feed air to provide initial heating of the feed air stream to the 500° F to 700° F temperature range. Additionally, the oxygen-depleted gas stream, including waste nitrogen, typically has sufficient oxygen still present in its composition such that with the addition of fuel and potentially external oxygen supply in the form of air, the oxygen-depleted gas stream can be combusted to provide the heat for enhanced desorption of the oxidized oxygen acceptor in a fired heater. This latter step provides highly beneficial heat integration and oxygen and elevated pressure utilization within the overall process for obtainment of high efficiencies. Alternatively, the oxygen-depleted gas stream can be subjected to oxygen-permeable membrane separation to concentrate the oxygen content sent to combustion, while the reject stream has enhanced nitrogen content. This nitrogen-rich stream can be produced as a commercial nitrogen product, or further treated catalytically with hydrogen to produce an even higher purity nitrogen product. The oxygen acceptor is preferably an alkali metal nitrate and nitrite mixture with various oxide adjuvants.

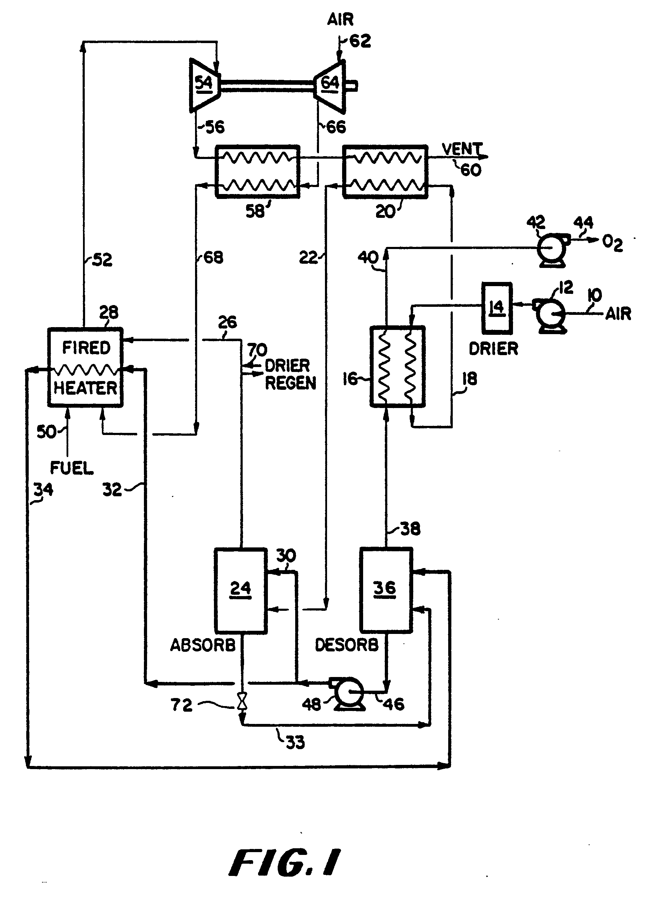

The process will now be described in greater detail with reference to the various drawings. In FIG 1 an embodiment of the present invention is schematically illustrated wherein feed air 10 is compressed in compressor 12 to approximately 90 psia and dried and separated from any hydrocarbons and carbon dioxide in drier 14 which can comprise a switching pair of adsorptive beds which can be individually separately regenerated. The clean, dried, elevated pressure feed air stream is initially warmed against product oxygen in indirect heat exchanger 16 before passing in line 18 to additional heating in indirect heat exchanger 20 wherein the feed air stream is heated to an initial temperature in the range of 500° F to 700° F and preferably 650° F (or a safe margin above the melting point of the oxygen acceptor) against a combustion product utilizing oxygen-depleted gas. The heated feed air stream in line 22 is then contacted with an oxygen acceptor in absorption zone 24, wherein the oxygen acceptor preferably comprises a molten salt mixture of alkali metal nitrate and nitrite salts containing various oxides, peroxides and superoxides as well as other beneficial adjuvants.

Oxygen from the feed air stream is chemically absorbed by the oxygen acceptor in reversibly passing from the nitrite to the nitrate state. This absorption is exothermic and creates considerable additional heat. To compensate for this heat increase, the feed air stream which constitutes a heat sink cools the oxygen acceptor from the oxygen acceptor's approximately 900° F to 1300° F temperature by the feed air being heated from its 500° F to 700° range temperature of input to the absorption zone. This initial and further heating of the feed air stream provides efficient cooling of the oxygen acceptor and heating of the feed air respectively by the direct contact heat exchange between the acceptor and the feed air stream.

The oxygen-depleted gas stream in line 26 leaves the absorption zone and constitutes effectively waste nitrogen gas. A portion of this gas, which is dried and carbon dioxide-free, can be used to reactivate either of the switching beds of dryer 14 by a circuitous pathway partially illustrated at 70. The remaining oxygen-depleted gas stream in line 26 is introduced into fired heater 28, where it is combusted with fuel such as natural gas in line 50 as well as supplemental oxygen provided by air in line 68. The combustion of the oxygen-depleted gas stream in the fired heater for purposes of indirectly heat exchanging with the oxidized or reduced oxygen acceptor provides an efficient utilization of the elevated pressure, heated oxygen-depleted gas stream and its residual oxygen content. The combustion product from the fired heater 28 is removed in line 52, expanded to recover power in turbine 54 and passed in line 56 through indirect heat exchanger 58 and indirect heat exchanger 20 before being vented in line 60 as a waste nitrogen combustion product derived from the oxygen-depleted gas stream. The waste nitrogen stream 60 may be catalytically reacted with hydrogen to react with any residual oxygen to form water and result in a moist, carbon dioxide-containing high purity nitrogen product. Auxiliary air in line 62 is compressed in turbine 64, driven by turbine 54 to produce an elevated pressure auxiliary air stream in line 66 which is heated in indirect heat exchanger 58 against expanded combustion product before being introduced in line 68 into the fired heater 28 as additional oxygen.

The oxidized oxygen acceptor from absorption zone 24 is reduced in pressure through valve 72 and passed in line 33 into the desorption zone 36 to evolve product oxygen and to regenerate the oxygen acceptor for reuse and recycle. The regenerated oxygen acceptor, now low in oxygen content, is recycled in line 46 through pump 48. A portion is returned for absorption duty in line 30, while another portion in line 32 is passed through fired heater 28, where it is heated by indirect heat exchange with the combustion products of the oxygen-depleted gas stream to produce a superheated, regenerated oxygen acceptor stream in line 34. The superheated stream in line 34 is returned to the desorption zone 36 to provide a favorable elevation in temperature to assist in desorbing oxygen from the oxidized oxygen acceptor that is simultaneously being introduced into the desorption zone 36 in line 33. The reduction in pressure and the elevation in temperature or superheating of the oxygen acceptor assists in the desorption of oxygen in the desorption zone 36. This oxygen is removed in line 38 and is cooled by indirect heat exchange in heat exchanger 16 while warming the feed air stream 18. The cooled product oxygen in line 40 is then compressed in compressor 42 to the desired product pressure and removed as product oxygen in line 44.

Heat input to the regenerated oxygen acceptor in fired heater 28 is partially removed in the product oxygen in line 38 and recouped in indirect heat exchanger 16. The key process of using the oxygen-depleted gas stream at its elevated temperature and its elevated pressure, as well as using its residual oxygen content for combustion in the fired heater 28 to produce the necessary heat for desorption of the oxidized oxygen acceptor, provides a unique integration to a chemical absorption separation process which has not been contemplated in the art prior to the present invention. The partial preheating of the feed air stream by indirect heat exchange with the remaining heating being performed by direct heat exchange in the absorption zone 24 further enhances the absorption condition which should be accomplished at high pressure and low temperature to effect the highest absorption capacity without the utilization of an expensive apparatus to transfer heat by indirect heat exchange. The use of heat input in the fired heater 28 and heat removal by direct heat exchange by partially warmed air in absorption zone 24, provides a precisely calibrated use and transfer of heat within the chemical absorptive system for peak efficiency. Recoupment of heat which would otherwise be lost from the system overall is also benefited by the indirect heat exchangers 16, 20 and 58. Superheating of the oxygen ac ceptor after it has been regenerated and has a low oxygen content lessens the corrosive effect of the acceptor on process equipment.

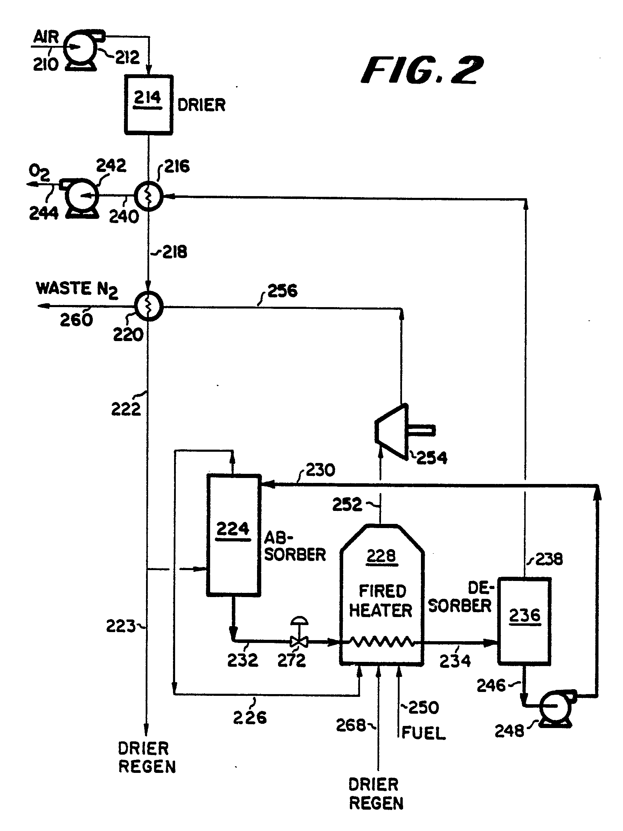

With regard to FIG 2, a second embodiment of the present invention is set forth which eliminates dual air compressor equipment and illustrates superheating of oxidized oxygen acceptor before regeneration. Air in line 210 is compressed in compressor 212 to approximately 90 psia and dried and separated from hydrocarbons and carbon dioxide in switching adsorptive beds 214 before being warmed by indirect heat exchange with product oxygen in heat exchanger 216. The feed air stream in line 218 is further warmed to a temperature in the range of 500°F to 700°F and preferably 650°F (or a safe margin above the melting point of the oxygen acceptor) in the heat exchanger 220 by indirect heat exchange with combustion products from the combustion of at least the oxygen content of the oxygen-depleted gas or waste nitrogen. The initially heated feed air stream in line 222 is then split into a stream which is introduced into the absorption zone 224 and a slipstream in line 223 which is utilized to regenerate the off-stream absorptive bed in the dryer 214 (not illustrated). The feed air stream introduced into the absorption zone 224 at approximately 650°F directly heat exchanges with regenerated and recycled oxygen acceptor from line 230 to cool the oxygen acceptor during the exothermic absorption of oxygen from the air by the oxygen acceptor.

The oxygen-depleted gas stream in line 226 constituting predominantly waste nitrogen is introduced into fired heater 228 to be combusted with fuel in line 250 and the wet and carbon dioxide and hydrocarbon-containing dryer regeneration air in line 268, which is resultant from air in line 223 being processed through the off-stream absorption column 214 and then directed to line 268. In the fired heater 228, the elevated pressure and elevated temperature, as well as at least the residual oxygen of the oxygen-depleted stream in line 226 are all utilized to further heat the oxygen acceptor which has been oxidized in the absorption zone 224 and removed in line 232 and reduced in pressure through valve 272. The oxidized oxygen acceptor is indirectly heat exchanged in the fired heater to enhance its desorption potential. The reduction in pressure and elevation in temperature or superheating the oxidized oxygen acceptor to a two-phase stream in line 234 readily desorbs oxygen from the ac ceptor in desorption zone 236. It is understood that the oxygen-depleted stream in line 226 can be separated in a membrane permeable to oxygen to create an oxygen-rich stream for combustion in heater 228 and a nitrogen-rich stream, which can be a commercially acceptable product. It is also possible in this embodiment to locate the heater 228 to indirectly heat exchange only with a separate side stream of the regenerated oxygen acceptor from line 246, which is returned to the desorber 236 to impart heat thereto so as to assist desorption of oxygen from the oxidized oxygen acceptor as in the first embodiment and thus avoid excessive corrosion of process equipment.

The combustion product from the fired heater 228 passes through line 252 and is expanded to a lower pressure in turbine 254 with the recovery of work. The low pressure combustion product in 256 is further cooled by recouping its heat in indirect heat exchanger 220 against warming feed air before being removed as a vent stream in line 260.

High purity oxygen is removed from the desorption zone 236 in line 238, and its heat is recouped by indirect heat exchange with feed air in heat exchanger 216. The cooled product oxygen in line 240 is increased to product pressure specifications in compressor 242 before being removed as product oxygen in line 244.

The regenerated oxygen acceptor leaves the desorption zone 236 in line 246 and is returned to elevated absorption pressure in pump 248 before being returned to the absorption zone in line 230. The work recovered in turbine 254 may be utilized in any of the compressors or pumps of the system for energy efficiency. This embodiment reduces capital costs of compressor equipment, but still enjoys the internal integration of the heat cycle as described for the embodiment illustrated in FIG 1.

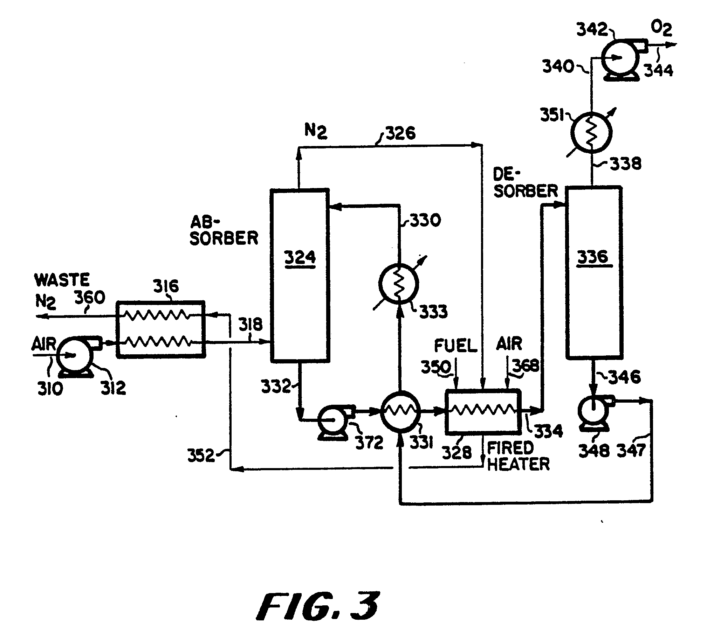

A common feature found in the embodiments of FIG 1 and FIG 2 is the recovery of work energy from the oxygen-depleted gas or combustion product by expansion of the high pressure stream through a turbine with recovery of power. In FIG 3, yet another embodiment is demonstrated which utilizes low pressure feed air and thus recovers only heat energy rather than pressure recovery in the form of work from the combustion products of the combustion of at least the oxygen content of the oxygen-depleted stream containing waste nitrogen. In FIG 3, feed air previously dried and separated from carbon dioxide and hydrocarbons is introduced in line 310 to a blower at 312 which provides the air at slightly above atmospheric pressure. This feed air stream is initially heated against high temperature combustion products by indirect heat exchange in heat exchanger 316 to raise its temperature to approximately 500°F to 700°F, preferably 650°F (or a safe margin above the melting point of the oxygen acceptor) before being introduced in line 318 into absorption zone 324. The feed air stream is further heated to the temperature of the absorption zone in the range of 900°F to 1300°F by direct heat exchange with oxygen acceptor in the form of alkali metal nitrate and nitrite with preferably oxide, peroxide and superoxide adjuvants. This final heating of the air stream effects a desirably result with the oxygen acceptor by controlling the exothermic absorption of oxygen from the feed air stream while elevating the feed air stream to absorption conditions. The direct heat exchange by comingling the intermediately-heated feed air stream with the oxygen acceptor avoids the cost and problems with additional indirect heat exchange apparatus.

Oxygen-depleted gas in line 326 containing waste nitrogen is removed from the absorption zone 324 and introduced into a fired heater 328 where it is combusted with fuel in line 350, such as natural gas, and additional air in line 368 to result in hot combustion product which indirectly heat exchanges with oxidized oxygen acceptor in the fired heater 328. The combustion product from the fired heater 328 is removed in line 352 and cooled to recoup heat energy by indirect heat exchange with warming feed air in heat exchanger 316 before being removed as a vent stream in line 360 containing the combustion product derived from at least the oxygen content of the oxygen-depleted gas-containing waste nitrogen. Again in this embodiment, heater 328 can exchange with a slip stream of regenerated acceptor recycled to desorber 336 to minimize corrosion.

Oxygen acceptor in the absorption zone 324 chemically absorbs oxygen to render an oxidized oxygen acceptor in line 332 which is pumped to elevated pressure in pump 372 and heated against returning regenerated oxygen acceptor in indirect heat exchanger 331 before being further heated to superheated potentially two-phase condition in fired heater 328 and passed in line 334 to desorption zone 336. Under the elevated conditions provided by the fired heater 328, the chemically absorbed oxygen in the oxygen acceptor is desorbed in the desorption zone 336 and evolved in line 338. The heat contained in the product oxygen is recouped in heat exchanger 351 against a process stream such as water for a steam production process or alternately against feed air, although this latter option is not shown. The cooled oxygen product in line 340 is then pressurized to product specifications in compressor 342 and removed as product oxygen in line 344.

The regenerated oxygen acceptor in line 346 is pumped in pump 348 to the absorption zone 324 through line 347. The regenerated oxygen acceptor is cooled to absorption conditions by indirect heat exchange of the regenerated oxygen acceptor in heat exchanger 331 against oxidized oxygen acceptor and further cooled in heat exchanger 333 against a process stream before being introduced into the absorption zone in line 330. Again, the embodiment of FIG 3 enjoys the heat integration of recovering heat by combustion of at least the oxygen content of the oxygen-depleted gas and the capital conservation of direct heat exchange of feed air as does the embodiments in FIG 1 and FIG 2. The significant difference in the embodiment of FIG 3 lies in the pressure of the system and the absence of pressure recoupment in the combustion product gas stream. However, this embodiment also enjoys the utilization of direct heat exchange of initially heated feed air by further heating the air directly by comingling the feed air with oxygen acceptor in the absorption zone to avoid expensive heat exchange equipment and to exercise control over the exothermic oxygen absorption reaction in the absorption zone. The energy value of high temperature oxygen-depleted gas and the residual oxygen content of that gas is recovered for utilization to enhance desorption of the oxidized oxygen acceptor so that within the process, an efficient heat utilization and transfer is performed wherein the oxidized oxygen acceptor is superheated prior to desorption and the regenerated oxygen acceptor is cooled to enhance absorption capacity without significant loss of heat from the total system and without requirements for additional expensive indirect heat exchange equipment. All embodiments can be arranged to heat a separate loop of regenerated acceptor from the de sorber, which then heats the oxidized acceptor for minimal process equipment corrosion.

The heating of the feed air stream from the approximately preferred temperature of 650°F, to the absorption zone operating temperature eliminates the need for expensive high temperature heat exchangers. It further provides some cooling of the oxygen acceptor, thus increasing its capacity for oxygen absorption. The cascading of heat through the oxygen acceptor to the waste nitrogen in the oxygen-depleted gas stream and ultimately to power generation, is very cost effective when compared to providing each of these duties separately. The power generated by the combustion product turbine can be sufficient to drive all of the compression equipment required in the process. Much of this power comes from the pressurized oxygen-depleted gas stream which is combusted to a combustion product stream. It is possible to set conditions in the absorption zone to absorb less oxygen than optimal so that the oxygen-depleted stream has sufficient oxygen content to support the necessary combustion in the heater-acceptor heat exchanger without the need for any supplemental air. This power generation and utilization permits the process of the present invention to be potentially independent of an external electrical supply. The process of the present invention has been demonstrated to be approximately 10-20% less costly than the prior art chemical absorptive separation systems set forth in the prior art section. The present invention also has the capability of exporting about 5-10% more power with only a modest or no increase in fuel usage than those same systems.

As stated before the embodiments having higher pressure oxygen-depleted stream can be subjected to a membrane separation to separate oxygen from nitrogen and send oxygen to combustion and nitrogen to product. The nitrogen can be catalytically reacted with hydrogen to convert any oxygen to water. The moist nitrogen can be processed, such as by adsorption, to remove water and carbon dioxide. The dry nitrogen can then be cryogenically separated from argon and liquefied as a liquid nitrogen product.

The present invention has been set forth with reference to several preferred embodiments, however the scope of the invention should be ascertained from the claims which follow.

## Claims

1. In a continuous process for producing oxygen and/or nitrogen by the repeated steps of contacting a feed air stream with a molten solution of an alkali metal nitrate and nitrite oxygen acceptor, which absorbs oxygen to become oxidized in a reaction zone, separately releasing the oxygen from the oxidized oxygen acceptor so as to regenerate the oxygen acceptor and generate product oxygen in a desorption zone, recycling the regenerated oxygen acceptor and removing an oxygen-depleted gas stream, the improvement comprising:

a) initially heating the feed air stream to a temperature in the range of 500°F to 700°F by indirect heat exchange with a heat source;

b) further heating the feed air stream to reaction zone temperature in the range of 900°F to 1300°F by direct contact heat exchange with the oxygen acceptor, which is cooled to remove heat of the exothermic absorption of oxygen; and

c) heating the oxidized oxygen acceptor prior to regeneration in the desorption zone or the regenerated oxygen acceptor after regeneration in the desorption zone by indirect heat exchange with the combustion product of at least the oxygen content of the oxygen-depleted gas stream and a fuel source to drive the absorbed oxygen from the oxidized oxygen acceptor in the desorption zone.

2. The process of Claim 1 including recovering energy from the combustion product of at least the oxygen content of the oxygen-depleted gas stream.

3. The process of Claim 2 wherein the combustion product is heat exchanged against the feed air stream of step a).

4. The process of Claim 2 wherein the combustion product is reduced in pressure to recover work through a turbine.

5. The process of Claim 1 wherein the feed air stream of step a) is heated to approximately 650°F.

6. The process of Claim 1 wherein the feed air stream is dried and separated from any contained carbon dioxide.

7. The process of Claim 4 wherein the work recovered from the combustion product is used to compress the feed air stream.

8. The process of Claim 4 wherein the work recovered from the combustion product is used to compress the product oxygen.

9. The process of Claim 1 wherein product oxygen is indirectly heat exchanged against the feed air stream of step a).

10. The process of Claim 1 wherein the oxidized oxygen acceptor is elevated in pressure before being regenerated in the desorption zone.

11. The process of Claim 1 wherein the oxidized oxygen acceptor is reduced in pressure before being regenerated in the desorption zone.

12. The process of Claim 1 wherein a separate stream of regenerated oxygen acceptor is removed from the desorption zone, heated per step c) and returned to the desorption zone to directly heat regenerating oxidized oxygen acceptor.

13. The process of Claim 1, step c), wherein the oxidized oxygen acceptor is heated prior to regeneration in the desorption zone.

14. The process of Claim 1, step c) wherein supplemental air is used in the combustion of the oxygen-depleted gas stream and the fuel source.

15. The process of Claim 1 wherein absorption of oxygen in the absorption zone is set to provide sufficient oxygen in the oxygen-depleted gas stream to combust with the fuel source without supplemental air.

16. The process of Claim 1 wherein the oxygen-depleted gas stream is separated into an oxygen-rich stream which is combusted in step c) and a nitrogen-rich stream, by passage over a membrane selective for nitrogen or oxygen.

17. The process of Claim 1 wherein the nitrogen content of the oxygen-depleted gas stream is separated from residual oxygen, water and carbon dioxide and recovered as a commercially pure nitrogen product.

FIG. 1

FIG. 2

**FIG. 3**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | US-A-4 340 578 (D.C. ERICKSON) --- | | C 01 B 13/02 |
| A | EP-A-0 131 920 (AIR PRODUCTS AND CHEMICALS) --- | | |
| A | EP-A-0 217 098 (AIR PRODUCTS AND CHEMICALS) ----- | | |

**TECHNICAL FIELDS SEARCHED (Int. Cl.4)**

C 01 B

The present search report has been drawn up for all claims

| Place of search | Date of completion of the search | Examiner |
|---|---|---|
| THE HAGUE | 01-06-1989 | VAN BELLINGEN I.C.A. |